# EUROPEAN PATENT APPLICATION

(11) **EP 3 960 394 A1**
(43) Date of publication of application: **02.03.2022**
(21) Application number: 20192466.9
(22) Date of filing: 24.08.2020
(51) Int. Cl.: B25J 9/16

(54) **METHOD AND SYSTEM FOR DESIGNING ROBOT CELLS**

(71) Applicant: ABB Schweiz AG, 5400 Baden (CH)
(72) Inventor: BIRKE, Robert, 8802 Kilchberg (CH); BORRELLI, Elsi-Mari, 5430 Wettingen (CH); DAN, Andrei, 8057 Zürich (CH); GIANNOPOULOU, Georgia, 8049 Zürich (CH); SOMMER, Philipp, 8003 Zürich (CH)
(74) Representative: Zimmermann & Partner Patentanwälte mbB

(57) **Abstract**

A method and system are provided for designing robot cells. Actual examples of robot cells defined by 3D vector data are collected. The 3D vector data is then rasterized and used to train a model to autonomously generate robot cells. After being trained, the model autonomously generates voxel data of a robot cell. The voxel data is then vectorized to provide 3D vector data of the designed robot cell.

## Description

### BACKGROUND

The present inventions relate generally to robots, and more particularly, to designing robot trajectories and/or robot cell tools.

Designing robot cells is a time-consuming, laborious and expensive task. Conventional design tools using CAD-like environments may assist an engineer in designing robot cells. However, conventional design tools do not eliminate the need for specialized robotics and machinery expertise. CAD-like design tools also typically require complete details of all tooling and trajectories executed by the robot which is challenging to provide. Thus, even simple tasks require a significant amount of time and effort to design. As an example, a simple assembly task may require collecting two pieces and screwing them together. The cell design may then require two feeders, one for each part, a holder to keep the first part in place while the other part is screwed on, and a collector for the assembled part. The trajectories of the robot arm, namely the sequence of joint coordinates, must also be specified. Therefore, even simple cell designs can be difficult to develop.

### SUMMARY

A method and system are described for autonomously designing robot cells. Examples of actual robot cells are collected. The 3D vector data of the actual robot cells is then rasterized into voxel data. A model is then trained using the voxel data from the actual robot cells. The model may be a generative adversarial network with a generator that autonomously designs robot cells using voxel data and a discriminator that analyzes the voxel data from the actual robot cells and from the generated robot cells. After training the model, the generator may be used to autonomously generate robot cell designs based on specified robot tasks. The voxel data of the autonomously designed robot cell is then vectorized into 3D vector data for use in programming the robot and/or manufacturing robot cell tooling. The invention may also include any other aspect described below in the written description or in the attached drawings and any combinations thereof.

The system may be configured for designing the robot cell according to any method described herein. The system may comprise a rasterizer module configured for rasterizing the first 3D vector data; a generator module configured for autonomously generating the generated robot cell; a discriminator module configured for training the generator module; the generator module configured for autonomously generating the third voxel data; and a vectorizer module configured for vectorizing. Also, a use of the system for designing the robot cell using any method described herein is provided.

### BRIEF DESCRIPTION OF SEVERAL VIEWS OF THE DRAWINGS

The invention may be more fully understood by reading the following description in conjunction with the drawings, in which:
Figure 1 is a flow chart of a system for training a robot cell generator; and
Figure 2 is a flow chart of a system for generating robot cells.

### DETAILED DESCRIPTION

Designing robot cells is a complex task that is commonly based on Computer-Aided Design (CAD) environments for the specification of necessary tooling models and robot arm trajectories. The use of such environments requires robotics expertise and involves manual configuration and limited reusability, e.g., across project teams that use robots for similar tasks. An improvement over conventional robot cell design methods would be the use of generative models, such as convolutional neural networks, to automate the generation of tooling models and robot trajectories for a given robot task. This solution may enable faster and more economical designs of robot cells, since the improved methods rely less on robotics expertise and time-consuming manual configuration of CAD specifications.

Generative models have been used in limited applications, such as synthesizing realistic pictures of subjects such as faces or rooms. For example, deep convolutional neural networks (CNNs) have been used with 2D and 3D image data as well as 3D video formats. However, generative models have not been used to automate the design of robot cells. In the improved method of designing robot cells, a generative model may design the necessary tooling and/or robot trajectories for a particular task description. In the method, an abstract robot task may be converted into a 3D voxel image sequence. This format may then be used with CNNs to autonomously design a robot cell.

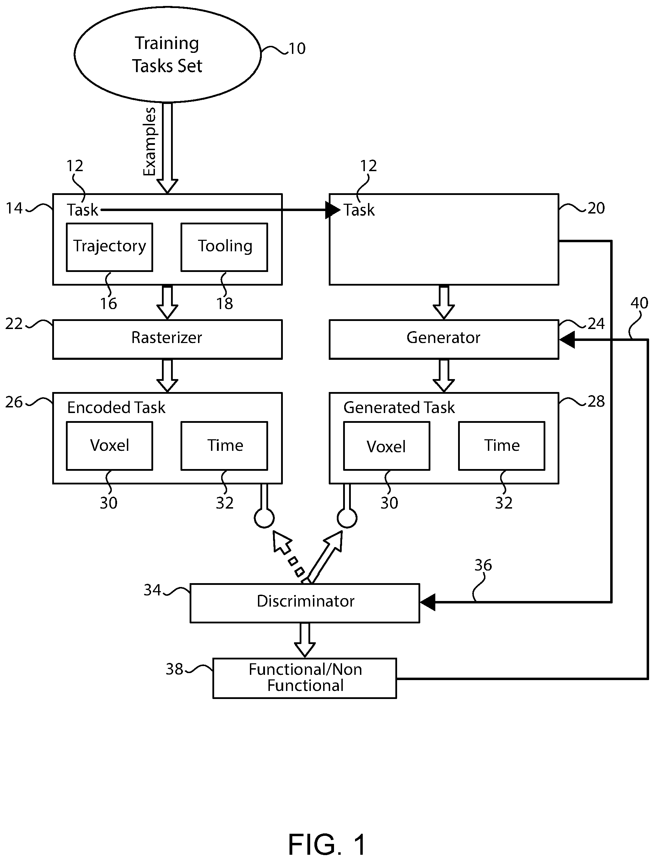

In the preferred method, a number robot cells 10 are specified through the use of CAD files containing time dependent dynamic 3D vector information describing the shape and position of the tooling used, as well as the robot trajectories 16 for the interaction with the tooling 18 and any moveable parts. Each robot cell design 14 may be tagged with a task label 12. The 3D time series vector data (e.g., a CAD file) may then be converted into a sequence of 3D voxel images 26 (i.e., time series voxel data) (see, encoded task in Figure 1) via rasterization 22 (e.g., with a rasterizer module 22). Next, the resulting 3D "movies" 26 (i.e., with voxel images 30 and timing data 32 associated with each image 30) may be used to train a CNN or a generative adversarial network (GAN) having two antagonizing models: a generator module 24 and a discriminator module 34. The generator 24 tries to learn how to create functional 3D movies 38 for a particular task label 12 (or identifier).

During training, a task label 12 for a robot cell design 20 to be generated is fed to the generator 20. Unlike the actual robot cell 14 that has been designed in a 3D vector time data format (e.g., CAD file), the robot cell design 20 to be generated does not include trajectory 16 and tooling data 18, but instead is only defined by the respective task label 12 that corresponds to the actual robot cell 14 (e.g., the same task label 12 is assigned to both the actual robot cell 14 and the task to be generated 20, 28). The generator 24 then generates a robot cell design 28 (i.e., a generated task) with voxel images 30 and corresponding time data 32 for the images. The discriminator 34 is randomly fed with real (exemplary) 26 and generated robot cells 28, each being defined by voxel time data 30, 32. The discriminator 34 tries to distinguish 38 between functional examples created by converting real example robot cells 26 and non-functional robot cells 28 that are generated by the generator 24. That is, the task label 12 is fed 36 to the discriminator 34, and the discriminator makes a determination 38 of whether each robot cell 26, 28 fed to the generator is a real robot cell 26 or a generated robot cell 38. This determination 38 is then fed 40 to the generator 24 in order for the generator 24 to improve its generated robot cells 28 so that they more closely match the actual robot cells 26. Over a series of iterations, the generator 24 learns to generate designs 28 which are indistinguishable from the real examples 26, such that the discriminator 34 becomes less successful in making accurate determinations 38 of whether a particular robot cell 26, 28 fed to the discriminator 34 is a real robot cell 26 or a generated robot cell 28.

After being trained, the generator 24 can then autonomously generate functional robotic cells 28 independently of the discriminator 34 and the training steps. The training may depend on the task label 12 and the generated robot cells 28 may be variations of the training examples. Thus, it is desirable for the training data 10 to be sufficiently varied to cover a wide range of required tasks 12. Depending on the training data 10, the task 12 might be specified at different granularities. For example, the user might specify "screw part A onto part B and collect into bin" or "pick part A from container 1, fix part A, pick part B from container 2, screw part B onto part A, place assembled part into bin". The latter task description 12 requires less training of the system but more experience by the user in splitting the robotic tasks 12. The user may be assisted in this operation by a matcher module 20 that splits tasks 12 into subtasks 12 and matches base task labels 12 in the training set 10. The generator 34 then uses the task 12 or subtasks 12 to generate a robot cell 28 for the task 12 or a robot cell 28 for each subtask 12.

The generated 3D voxel sequences 28 are then converted back into 3D vector time data of robotic trajectories 58 and 3D vector data of the tooling 56 by a vectorizer module 52. Finally, a stitcher module 54 may generate a continuous robot trajectory 58 based on a combination of several subtasks 52 and generate consistent tooling 26 across the subtasks 52. It may also be desirable to use the stitcher module 54 on the 3D voxel sequences 28 for the subtasks 12 before converting 52 the 3D voxel sequences 28 back into 3D vector data 56, 58. Thus, in this example a single complete 3D voxel sequence 28 for the robot trajectories 58 with consistent tooling 56 could be converted into 3D vector data 56, 58. A robot cell 60 may then be designed using the trajectories 58 to program the robot to perform robotic operations and the tooling designs 56 to manufacture the tooling, for example via 3D printing or any other conventional manufacturing techniques.

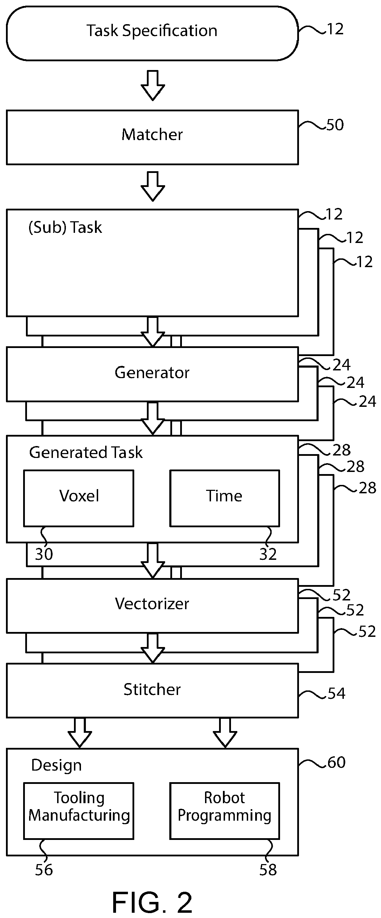

Thus, the improved method and system includes two functions: training the model (Figure 1) and using the model to design robot cells (Figure 2). Training the model may include the following steps: collect a dataset 10 of relevant robotic cell designs 14; label the robotic cell designs 14 with task identifiers 12; convert 22 the 3D vector time data (e.g., CAD designs) of the robot cell designs 14 into 3D voxel image sequences 26; and train a generative adversarial network 24, 34 with the 3D voxel image sequences 26 and their task identifiers 12. Using the model to generate robotic cells designs may include the following steps: specify the task 12; use a matcher module 50 to split the task 12 into subtasks 12 if the specified task 12 is less granular than the trained tasks 12; generate a 3D voxel image sequence 28 using the trained generator 24 for the task 12 or each subtask 12; convert the 3D voxel image sequence 28 into vector data 56, 58 for the robot trajectory 58 and tooling 56 with a vectorizer 52; use a stitcher module 54 to combine subtasks 28, 52 into a continuous trajectory 58 and consistent tooling 56; use the generated vector data 56 to manufacture the tooling; and use the generated vector-time trajectories 58 to program the robot.

While preferred embodiments of the inventions have been described, it should be understood that the inventions are not so limited, and modifications may be made without departing from the inventions herein. While each embodiment described herein may refer only to certain features and may not specifically refer to every feature described with respect to other embodiments, it should be recognized that the features described herein are interchangeable unless described otherwise, even where no reference is made to a specific feature. It should also be understood that the advantages described above are not necessarily the only advantages of the inventions, and it is not necessarily expected that all of the described advantages will be achieved with every embodiment of the inventions. The scope of the inventions is defined by the appended claims, and all devices and methods that come within the meaning of the claims, either literally or by equivalence, are intended to be embraced therein.

## Claims

1. A method of designing a robot cell (60), comprising:
providing an actual robot cell (14) defined by first 3D vector data (14, 18);
rasterizing (22) the first 3D vector data (14, 18) into first voxel data (26, 30, 32);
autonomously generating (24) a generated robot cell (28) defined by second voxel data (30, 32);
training a model (24) using the first voxel data (26) and the second voxel data (28);
specifying a robot task (12) to be performed;
autonomously generating (24) third voxel data (28) for the robot task (12) using the model (24);
vectorizing (52) the third voxel data (28) into second 3D vector data (56, 58); and
programming a robot trajectory (58) and/or providing a tool (56) using the second 3D vector data (56, 58).

2. The method according to claim 1, wherein the first and second 3D vector data (16, 18, 56, 58) are 3D time series vector data, the first, second and third voxel data (26, 28, 28) are time series voxel data, and comprising providing the robot trajectory (58) using the second 3D vector data (58).

3. The method according to any previous claim, wherein the first and second 3D vector data (16, 18, 56, 58) are CAD files.

4. The method according to any previous claim, wherein the actual robot cell (14) comprises 3D time series vector data (16, 18) of the robot trajectory (16) and the tool (18), and the generated robot cell (28) comprises time series voxel data (30, 32) of the robot trajectory (58) and the tool (56).

5. The method according to any previous claim, wherein the model (24) is trained with a convolutional neural network.

6. The method according to any previous claim, wherein the model (24) is trained with a generative adversarial network.

7. The method according to any previous claim, further comprising a task identifier (12), the task identifier (12) being assigned to the actual robot cell (14) and the generated robot cell (20, 28).

8. The method according to any previous claim, further comprising training the model (24) with a plurality of actual robot cells (14), each of the actual robot cells (14) being assigned a different task identifier (12), wherein the specified robot task (12) comprises one of the task identifiers (12).

9. The method according to any previous claim, wherein the model (24) comprises a generator (24) autonomously generating the generated robot cell (28), and further comprising a discriminator (34) training the generator (24) using the first and second voxel data (26, 28), the discriminator (34) making determinations (38) of whether the first voxel data (26) and the second voxel data (28) represent the actual robot cell (14, 26) or the generated robot cell (28), feeding (40) the determinations (38) from the discriminator (34) to the generator (24), and the generator (24) improving autonomous generation of a new generated robot cell (28) based on the determinations (38).

10. The method according to any previous claim, further comprising splitting (50) the specified robot task (12) into multiple subtasks (12), each of the multiple subtasks (12) corresponding to a task identifier (12) used to train the model (24).

11. The method according to claim 10, further comprising stitching (54) together a multiple of the second 3D vector data (52), each of the second 3D vector data (52) corresponding to one of the multiple subtasks (12), the stitching providing a continuous robot trajectory (58) and a consistent tool (56).

12. The method according to claim 10, further comprising stitching (54) together a multiple of the third voxel data (28), each of the third voxel data (28) corresponding to one of the multiple subtasks (12), the stitching providing a continuous robot trajectory (58) and a consistent tool (56).

13. A system of designing the robot cell (60) according to the method of any previous claim, comprising:
a rasterizer module (22) rasterizing the first 3D vector data (14, 18) into the first voxel data (26, 30, 32);
a generator module (24) autonomously generating the generated robot cell (28) defined by the second voxel data (30, 32);
a discriminator module (34) training the generator module (24) using the first voxel data (26) and the second voxel data (28);
the generator module (24) autonomously generating the third voxel data (28) for the robot task (12) after being trained; and
a vectorizer module (52) vectorizing the third voxel data (28) into the second 3D vector data (56, 58).

14. The system according to claim 13, further comprising a matcher module (58) splitting the specified robot task (12) into subtasks (12) trained into the generator module (24), and a stitcher module (54) stitching together a multiple of the generated robot cells (28), each of the generated robot cells (28) corresponding to one of the subtasks (12).
